# EUROPÄISCHE PATENTSCHRIFT

(11) **EP 3 864 261 B1**
(45) Veröffentlichungstag und Bekanntmachung des Hinweises auf die Patenterteilung: **22.03.2023**
(21) Anmeldenummer: 19805895.0
(22) Anmeldetag: 10.10.2019
(51) Int. Cl.: F01N 3/20

(54) **VERFAHREN ZUR STEUERUNG EINES RÜCKLAUFVENTILS UND ENTSPRECHENDES ABGASSYSTEM**
METHOD FOR CONTROLLING A BACKFLOW VALVE AND CORRESPONDING EXHAUST SYSTEM
PROCÉDÉ DE COMMANDE D'UNE VANNE DE RETOUR ET SYSTÈME D'ÉCHAPPEMENT CORRESPONDANT

(30) Priorität: 10.10.2018 DE 102018217305
(43) Veröffentlichungstag der Anmeldung: 18.08.2021
(73) Patentinhaber: Vitesco Technologies GmbH, 93055 Regensburg (DE)
(72) Erfinder: BAUER, Peter, 81737 München (DE); HAMANN, Michael, 81737 München (DE); DIOUF, Cheikh, 81737 München (DE); JACQUES, Romain, 81737 München (DE)
(74) Vertreter: Vitesco Technologies
(86) Internationale Anmeldenummer: PCT/EP2019/077452
(87) Internationale Veröffentlichungsnummer: WO 2020/074630

(56) Entgegenhaltungen:
- EP-A1- 1 656 986
- EP-A1- 2 131 021
- WO-A1-2017/050814
- WO-A1-2017/212015
- JP-A- 2012 102 637
- US-A1- 2011 047 972
- US-A1- 2017 241 315

## Beschreibung

Die Erfindung betrifft Verfahren zur Steuerung eines Rücklaufventils eines Abgassystems, wobei das Abgassystem umfasst:
- ein Katalysatorsystem,
- einen Harnstofflösungstank,
- zumindest ein Dosierventil, zum Einspritzen von Harnstofflösung in das Katalysatorsystem,
- ein Leitungssystem, das einen Fluss von Harnstofflösung aus dem Harnstofflösungstank zum Dosierventil und zurück ermöglicht,
- eine zwischen dem Harnstofflösungstank und dem Dosierventil im Leitungssystem angeordnete Pumpe,
- ein zwischen dem Dosierventil und dem Harnstofflösungstank im Leitungssystem angeordnetes Rücklaufventil, und
- einen Drucksensor, der eingerichtet ist den Druck im Leitungssystem zu messen, wobei das Verfahren die folgenden Schritte umfasst:
- Feststellen, ob während des Betriebs des Abgassystems (1) eine oder mehrere der folgenden Zustände vorliegen:
   a) eine Einspritzrate pro Zeit von Harnstofflösung des Dosierventils (6) kleiner oder gleich einer vordefinierten Einspritzgrenze ist,
   b) ein vom Drucksensor (10) im Leitungssystem (7) gemessener Druck eine vordefinierte erste obere Druckgrenze (P2) überschreitet,
- Öffnen des Rücklaufventils (9) für eine erste vordefinierte Öffnungsdauer (Δt1), wenn die Zustände a) und b) vorliegen, sowie mindestens einer der Zustände bereits für mindestens eine vordefinierte Zeitspanne (Δta) vorliegt,
- Schließen des Rücklaufventils (9) nach Ablauf der ersten vordefinierten Öffnungsdauer (Δt1).

Die Erfindung betrifft außerdem ein Abgassystem der oben genannten Art, das weiterhin eine Steuereinheit umfasst, die mit dem Dosierventil, der Pumpe, dem Rücklaufventil und dem Drucksensor kommunizierend verbunden ist.

Zur Reduktion der Stickoxidkonzentration (NOₓ) im Abgas, insbesondere bei Dieselmotoren, werden seit vielen Jahren Methoden zur Abgasreinigung verwendet und weiterentwickelt. Eine etablierte Methode ist die Verwendung eines Selektive-Katalytische-Reduktions-Katalysators (SCR-Katalysator) im Abgassystem. Solche Katalysatoren sind insbesondere zur Senkung des NOₓ-Ausstoßes sowohl bei LKWs als auch bei PKWs vorteilhaft und finden breite Anwendung.

Eine verbreitete Variante des SCR-Katalysators verwendet eine Harnstofflösung (bspw. AUS 32 / AdBlue^{©}, eine Wasserlösung mit ca. 32 Gew.-% Harnstoff) als Reduktionsmittel, die in das Katalysatorsystem des Fahrzeugs eingespritzt wird. Die Harnstofflösung wird in der Abgasanlage verdampft und in gasförmigen Ammoniak (NH₃) umgewandelt. Dieser Ammoniak wird im SCR-Katalysator mit den schädlichen Stickoxiden NOₓ zu Stickstoff N₂ und Wasser H₂0 umgewandelt.

Zum Einspritzen der Harnstofflösung in den SCR-Katalysator wird eine Pumpe zur Beaufschlagung der Harnstofflösung mit Druck aus dem Harnstofflösungstank in ein Leitungssystem sowie ein Dosierventil zum Dosieren der unter Druck stehenden Harnstofflösung in das Katalysatorsystem verwendet.

Zum Teil wird im Stand der Technik die übrige Harnstofflösung beim Abschalten des Abgassystems aus dem Leitungssystem zurückgepumpt, um insbesondere ein Vereisen der Harnstofflösung bei sehr niedrigen Temperaturen zu vermeiden. Alternativ oder zusätzlich können der Harnstofflösungstank bzw. Teile des Leitungssystems beheizt werden. In neueren Abgassystemen mit SCR-Katalysator ist es weiterhin üblich ein Rücklaufventil vorzusehen, durch das überschlüssige Harnstofflösung aus dem Leitungssystem zurück in den Harnstofflösungstank fließen kann. Üblicherweise wird dieses Ventil aber im normalen Betrieb des Abgassystems geschlossen gehalten und nur bei einer Abschaltung des mit dem Abgassystem verbundenen Motors geöffnet (also beispielsweise beim Parken eines Kraftfahrzeugs mit einem solchen Abgassystem).

Die Einspritzrate von Harnstofflösung durch das Dosierventil wird üblicherweise an den Fahrzustand (Motordrehzahl, Gang, Geschwindigkeit, Abgastemperatur etc.) des Fahrzeugs, in dem sich das Abgassystem befindet, sowie an Messungen der Abgaszusammensetzung durch einen Abgassensor gasstromabwärts hinter dem SCR-Katalysator gekoppelt.

Im Betrieb baut die Pumpe einen Betriebsdruck (beispielsweise 5 bis 10 bar) im Leitungssystem auf. Nach und während einem Einspritzvorgang wird der Druck auf den Betriebsdruck angehoben, sodass der Einspritzvorgang wohldefiniert und gleichmäßig erfolgen kann. Ein zu hoher oder zu niedriger Druck beim Einspritzen kann negative Auswirkungen auf die Abgasreinigung haben, da sich die Harnstofflösung dann nicht in gewünschter Weise verteilt bzw. eine falsche Menge Harnstofflösung eingespritzt wird.

Es hat sich in der Praxis als problematisch herausgestellt, wenn ein Fahrzeug mit einem eingangs genannten Abgassystem von einem Fahrzustand mit hoher Einspritzrate, bzw. bei hoher Motorleistung und Abgastemperatur (z.B. Fahrt mit hoher Geschwindigkeit) schnell zu einem Fahrzustand mit sehr niedriger Einspritzrate (z.B. Stillstand bei laufendem Motor an der Ampel, Stau, etc.) wechselt. In diesem Fall ist bereits ein Betriebsdruck im Leitungssystem aufgebaut. Gleichzeitig findet (zumindest für einen kurzen Zeitraum) keine oder nur eine sehr geringe Harnstofflösungseinspritzung statt und ein Druckabbau im Leitungssystem erfolgt also auch nicht. Die bereits unter Druck stehende Harnstofflösung, die im Leitungssystem verbleibt, wird durch die Wärme des Motors / Abgases erhitzt. Dies wiederum führt zu einem sehr starken Druckanstieg im Leitungssystem bis der "Rückstau" an Harnstofflösung abgebaut ist. Einerseits führt dies zeitweilig zu dem zuvor beschriebenen ungleichmäßigen Einspritzverhalten bzw. zu einer Fehlfunktion und dem nicht Öffnen des Dosierventils, was die Abgasreinigung verschlechtert. In Extremfällen kann das Dosierventil sogar blockieren, wenn der Überdruck im Leitungssystem zu groß wird. Ein ähnliches Problem kann bei einer teilweisen Vereisung der Harnstofflösung im Leitungssystem 7 beim Fahrzeugstart auftreten. Das Abtauen der Harnstofflösung im Leitungssystem kann dann bei niedriger oder keiner Einspritzrate auch zu einem Druckanstieg führen.

Gleichzeitig erfordern diese (temporären) Druckspitzen sehr widerstandsfähige, elastische und druckresistente Harnstoffleitungen (beispielsweise aus Ethylen-Propylen-Dien-Kautschuk) im Leitungssystem, was die Herstellung erschwert und die Kosten des Systems erhöht.

Bekannte Rücklaufventile weisen zwar zum Teil ein mechanisches Notfall-Öffnungsverhalten auf, dieses darf jedoch nur bei einem sehr hohen Überdruck auftreten, um das normale Schließverhalten des Rücklaufventils nicht negativ zu beeinflussen. Üblicherweise tritt dieses Notfall-Öffnen jedoch erst bei mehrfachen Betriebsdruck auf, wenn es bereits zu Schäden am Leitungssystem oder dem Dosierventil gekommen sein kann. Gleichzeitig wäre ein Rücklaufventil das automatisch und allein auf Grundlage des vorliegenden Drucks öffnet nicht zielführend, da es auch in anderen Fahrzuständen des Fahrzeugs (zum Beispiel bei sehr hohen Einspritzraten der Harnstofflösung) kurzzeitig zu einem Überdruck im Leitungssystem kommen kann, ohne das ein Öffnen des Rücklaufventils in diesem Fall wünschenswert wäre. Dies würde sogar das Einspritzverhalten negativ beeinflussen bzw. den Energieverbrauch erhöhen.

Die US 2018/178162 A1 offenbart eine Vorrichtung zur Förderung von wässriger Harnstofflösung. Die Vorrichtung weist eine Fördereinrichtung und einen Temperatursensor auf. Der Temperatursensor ist dazu eingerichtet die Temperatur der wässrigen Harnstofflösung zu erfassen. Die Fördereinrichtung betreibt eine Fördereinheit während eines bestimmten Zeitraumes, der einen Teil eines Zeitraums umfasst, in dem die vom Temperatursensor erfasste Temperatur der wässrigen Harnstofflösung auf einem eutektischen Punkt gehalten wird und die wässrige Harnstofflösung eine latente Verfestigungswärme abstrahlt.

Die Aufgabe, welche durch die Erfindung gelöst wird, besteht darin, in einem Abgassystem der eingangs genannten Art schädliche Druckspitzen im Leitungssystem, insbesondere infolge von schnellen Wechseln des Fahrzustandes, zu vermeiden.

Erfindungsgemäß wird zur Steuerung eines eingangs genannten Abgassystems ein Verfahren zur Verfügung gestellt, umfassend die folgenden Schritte:
- Feststellen, ob während des Betriebs des Abgassystems eine oder mehrere der folgenden Zustände vorliegen:
   a) eine Einspritzrate pro Zeit von Harnstofflösung des Dosierventils kleiner oder gleich einer vordefinierten Einspritzgrenze ist,
   b) ein vom Drucksensor im Leitungssystem gemessener Druck eine vordefinierte erste obere Druckgrenze überschreitet,
- Öffnen des Rücklaufventils für eine erste vordefinierte Öffnungsdauer, wenn die Zustände a) und b) vorliegen, sowie mindestens einer der Zustände bereits für mindestens eine vordefinierte Zeitspanne vorliegt,
- Schließen des Rücklaufventils nach Ablauf der ersten vordefinierten Öffnungsdauer, wobei
das Rücklaufventil nach dem Schließen in einer Sequenz mindestens ein zweites Mal für eine zweite vordefinierte Öffnungsdauer geöffnet und dann wieder geschlossen wird.

Mit diesem Verfahren wird sichergestellt, dass das Rücklaufventil nur dann kontrolliert geöffnet wird, wenn sowohl ein Überdruck im Leitungssystem als auch eine niedrige Einspritzrate von Harnstofflösung vorliegt und gleichzeitig zumindest einer der beiden Zustände am Stück für eine vordefinierte Zeitspanne eingetreten ist. Damit wird sichergestellt, dass der gezielte Druckablass durch das Verfahren mittels des Rücklaufventils nicht schon bei kurzzeitigen Druckspitzen bei einer hohen Einspritzrate der Harnstofflösung eintritt, was den normalen Betrieb des Abgassystems negativ beeinflussen würde.

Das Abgassystem kann eine Steuereinheit umfassen, die mit dem Dosierventil, der Pumpe, dem Rücklaufventil und dem Drucksensor kommunizierend verbunden ist, um das Verfahren auszuführen.

Üblicherweise ist es nicht möglich, das Rucklaufventil simultan über die Messdaten des Drucksensors zu steuern, da die Druckmessung während des schnellen Druckabfalls bei offenen Rucklaufventil nicht genau und zeitgleich genug ist und leicht zu einem "Überschießen" beim Druckablassen führen würde. Stattdessen können vordefinierte Öffnungszeiten verwendet werden. Die erste vordefinierte Öffnungsdauer kann beispielsweise 10 ms betragen. Die erste vordefinierte Öffnungsdauer (und eventuelle zweite, dritte oder vierte etc. vordefinierte Öffnungsdauern) können aber auch Druckabhängig vordefiniert sein. So kann bspw. bei einem Überdruck von 1 bar (bei einem Betriebsdruck von z.B. 5 bar) die erste vordefinierte Öffnungsdauer 10 ms und bei einem Überdruck von 1,5 bar kann die erste vordefinierte Öffnungsdauer 12 ms betragen (lediglich beispielhafte Werte).

Die vordefinierte Zeitspanne kann beispielsweise zwischen 5 Sekunden und 60 Sekunden betragen. Bei einer hohen Einspritzrate von Harnstofflösung wird in einer solchen Zeitspanne üblicherweise mehrfach eingespritzt.

Die vordefinierte Einspritzgrenze kann exakt 0 ml pro Stunde betragen oder bei einem geringen endlichen Wert, z.B. 10ml pro Stunde liegen.

Die Einspritzrate an Harnstofflösung kann beispielsweise in Reaktion auf Messwerte eines stromabwärts des SCR-Katalysators angeordneten Abgassensor bestimmt werden.

. Der Druckabbau kann dann sequenziell stattfinden, wobei die Anzahl an Öffnungsvorgängen und die Öffnungsdauern einer Sequenz vordefiniert sein können.

Es ist auch möglich, dass die Auswahl einer Sequenz von einem der festgestellten Zustände, beispielsweise vom Druck, abhängt. Ein sequenzielles Öffnen des Rücklaufventils erleichtert es, den Druck zurück zum Betriebsdruck zu führen, ohne über das Ziel hinauszuschießen. Würde der Druck zu weit abgesenkt, so würde dies den Stromverbrauch der Pumpe unnötig erhöhen, da diese den Betriebsdruck in der Folge neu herstellen müsste.

Es ist bevorzugt, wenn das Rücklaufventil zwischen je zwei Öffnungsvorgängen für eine Schließdauer von mindestens 250ms geschlossen bleibt. Damit kann z.B. sichergestellt werden, dass eine exakte Druckmessung vorliegt, bevor entschieden wird, ob das Rücklaufventil erneut geöffnet wird. Gegebenenfalls kann festgestellt werden, ob der Druck in dieser Schließdauer wieder ansteigt und gegebenenfalls eine weitere obere Druckgrenze überschreitet.

In einer bevorzugten Ausführungsform wird nach einem Schließen des Rücklaufventils festgestellt, ob eine vordefinierte untere Druckgrenze unterschritten wurde, und falls die untere Druckgrenze nicht unterschritten wurde, wird das Rücklaufventil erneut für eine weitere vordefinierte Öffnungsdauer geöffnet. Das Rücklaufventil kann zum Beispiel erneut geöffnet werden, wenn der Druck noch oberhalb des Betriebsdrucks liegt. Es ist auch möglich das jeweils erneute Öffnen des Rücklaufventils an ein Überschreiten einer vordefinierten zweiten oberen Druckgrenze, dritten oberen Druckgrenze, vierten oberen Druckgrenze etc. jeweils nach dem vorherigen Schließen des Rücklaufventils zu koppeln. Wird ein Überschreiten dieser weiteren oberen Druckgrenze beispielsweise innerhalb einer vorgesehenen Schließdauer zwischen Öffnungsvorgängen festgestellt, so wird das Rücklaufventil erneut geöffnet, falls nicht, wird das Verfahren beendet und ein erneutes Öffnen des Ventils ist erst wieder beim erfindungsgemäßen kumulativen, dauerhaften Vorliegen der Zustände a) und b) vorgesehen.

Es ist bevorzugt, wenn mindestens eine vordefinierte Öffnungsdauer angepasst wird, wenn festgestellt wird, dass der gemessene Druck nach Ablauf der vordefinierten Öffnungsdauer außerhalb einer Toleranz um einen erwarteten Druck liegt. Damit kann sichergestellt werden, dass eventuell Fehlkalibrierungen im Verfahren bzw. Veränderungen im Öffnungsverhalten des Rücklaufventils ausgeglichen werden können. Das Rücklaufventil kann beispielsweise ein Magnetventil mit Membran sein, in dem sich im Laufe der Zeit die Membran langsam abnutzen kann bzw. die Magnetkraft verändern kann (z.B. durch Restmagnetisierungen). Zum Beispiel kann bei einer oberen Druckgrenze von 6 bar (1 bar über Betriebsdruck) und einer ersten Öffnungsdauer von 10 ms ein resultierender Druck nach dem erneuten Schließen des Rücklaufventils von 5,2 bar ±0,1 bar erwartet werden. Wird nun ein Druck von 5,4 bar festgestellt, so wird die erste Öffnungsdauer vergrößert. Die vordefinierten Öffnungsdauern können beispielsweise proportional entsprechend Ihrer Abweichung vom erwarteten Druckabfall angepasst werden, also im obigen Beispiel 10ms x (6 bar -5,2 bar) / (6 bar - 5,4 bar) = 13,3ms. Es sind aber auch andere funktionale Anpassungen vorstellbar, beispielsweise nur um einen kleinen Bruchteil (z.B. 10%) einer sich aus einer proportionalen Anpassung ergebenden Anpassung (im o.g. Beispiel etwa von 10ms um 0,33ms auf 10,33ms anstatt auf 13,3ms). Somit kann ein Überkompensieren vermieden werden.

In einer Ausführungsform beträgt die Zeitspanne 5 Sekunden, vorzugsweise zwischen 5 und 60 Sekunden. Damit kann sichergestellt werden, dass es sich bei dem überdruck nicht um ein kurzzeitige Druckspitze handelt, bei der kein Ablassen von Druck notwendig ist.

Es ist bevorzugt, wenn die erste obere Druckgrenze 120% eines Betriebsdrucks zum Einspritzen der Harnstofflösung beträgt und / oder wenn die erste obere Druckgrenze 1 bar über dem Betriebsdruck liegt. Damit ist sichergestellt, dass ein ausreichend großer Überdruck über dem Betriebsdruck vorliegt bevor ein Druckablassen erfolgt.

Weiterhin können diverse weitere Faktoren Einfluss auf die benötigte Menge an zuzugebender Harnstofflösung haben, was den Druckabbau und den Zeitpunkt und die Länge der Einspritzung haben, bspw. die verwendeten Materialien, das Fahrzeug oder die Motorkonfiguration.

Die oben genannte Aufgabe wird außerdem durch ein Abgassystem gelöst, umfassend:
- ein Katalysatorsystem,
- einen Harnstofflösungstank,
- zumindest ein Dosierventil, zum Einspritzen von Harnstofflösung in das Katalysatorsystem,
- ein Leitungssystem, das einen Fluss von Harnstofflösung aus dem Harnstofflösungstank zum Dosierventil und zurück ermöglicht,
- eine zwischen dem Harnstofflösungstank und dem Dosierventil im Leitungssystem angeordnete Pumpe,
- ein zwischen dem Dosierventil und dem Harnstofflösungstank im Leitungssystem angeordnetes Rücklaufventil, und
- einen Drucksensor, der eingerichtet ist, den Druck im Leitungssystem zu messen,
- eine Steuereinheit, die mit dem Dosierventil, der Pumpe, dem Rücklaufventil und dem Drucksensor kommunizierend verbunden ist,
dadurch gekennzeichnet, dass die Steuereinheit dazu eingerichtet ist, ein Verfahren nach einem der vorstehenden Ausführungsformen auszuführen. "Kommunizierend verbunden" bedeutet dabei, dass die Steuereinheit beispielsweise Daten von dem Dosierventil, der Pumpe, dem Rücklaufventil und dem Drucksensor empfangen kann und Steuerbefehle an das Dosierventil, die Pumpe, das Rücklaufventil und den Drucksensor übermitteln kann.

Die Steuereinheit kann innerhalb oder außerhalb des Fördersystems angeordnet sein.

Vorzugsweise umfasst das Leitungssystem Leitungen aus Polyamid. Da mit dem erfindungsgemäßen Verfahren langanhaltende Druckspitzen über dem Betriebsdruck vermieden werden können, ist es nicht notwendig besonders widerstandsfähige, elastische und druckresistente Harnstoffleitungen (beispielsweise aus Ethylen-Propylen-Dien-Kautschuk) im Leitungssystem zu verwenden, sondern es können Leitungen aus Polyamid verwendet werden, was die Herstellung erleichtert und die Kosten des Systems verringert.

Alle in Bezug auf das Verfahren offenbarten Merkmale werden auch in Bezug auf das Abgassystem beansprucht und umgekehrt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine Skizze einer Ausführungsform eines erfindungsgemäßen Abgassystems,
- Figur 2: ein Flussdiagramm einer Ausführungsform des erfindungsgemäßen Verfahrens, und
- Figur 3: eine schematische Darstellung des Druckverlaufs im Leitungssystem in einer Ausführungsform des erfindungsgemäßen Verfahrens

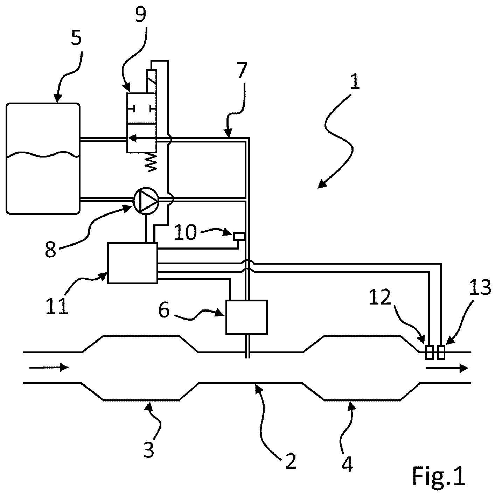

In der Figur 1 ist eine Skizze einer Ausführungsform eines erfindungsgemäßen Abgassystems 1 gezeigt. Das Abgassystem 1 umfasst ein Katalysatorsystem 2, das hier beispielhaft einen Diesel-Oxidations-Katalysator 3 und einen SCR-Katalysator 4 umfasst. Das Katalysatorsystem 2 kann aber auch noch weitere Komponenten und/oder andere Katalysatorkomponenten umfassen.

Das Abgassystem 1 umfasst weiterhin einen Harnstofflösungstank 5, zur Aufnahme eines Vorrats an wässriger Harnstofflösung wie AUS32 / Adblue^{©}. Ein Dosierventil 6 ist zum Einspritzen von Harnstofflösung in das Katalysatorsystem 2 vorgesehen. Das Abgassystem 1 beinhaltet ein Leitungssystem 7, das einen Fluss von Harnstofflösung aus dem Harnstofflösungstank 5 zum Dosierventil 6 und zurück ermöglicht. Zwischen dem Harnstofflösungstank 5 und dem Dosierventil 6 ist im Leitungssystem 7 eine Pumpe 8 angeordnet, um Harnstofflösung auf Betriebsdruck (bspw. 5 bar) dem Dosierventil 6 zuzuführen.

Zwischen dem Dosierventil 6 und dem Harnstofflösungstank 5 ist im Leitungssystem 7 ein Rücklaufventil 9 angeordnet. Das Rücklaufventil 9 ist hier ein normal offenes Magnetventil.

Das Leitungssystem 7 ist hier nur in einem möglichen Layout dargestellt. Die individuellen Leitungen des Leitungssystems 7 können auch anders verlaufen. Beispielsweise kann eine Zuleitung von der Pumpe 8 zum Dosierventil 6 von einer Rückleitung vom Dosierventil 6 zum Rücklaufventil 9 getrennt sein, und der Harnstofflösungsfluss erfolgt lediglich durch eine Vorkammer des Dosierventils 6.

Das Abgassystem umfasst weiterhin einen Drucksensor 10, der eingerichtet ist, den Druck im Leitungssystem 7 zu messen. Weiterhin ist eine Steuereinheit 11 vorgesehen, die mit dem Dosierventil 6, der Pumpe 8, dem Rücklaufventil 9 und dem Drucksensor 10 kommunizierend verbunden ist.

Die Steuereinheit 11 ist dazu eingerichtet, ein erfindungsgemäßes Verfahren auszuführen. Dazu kann sie mit einer entsprechenden Steuersoftware ausgestattet sein. Die Steuersoftware kann Maschinenlern-Algorithmen umfassen. So kann zum Beispiel eine vordefinierte Öffnungsdauer durch einen Maschinenlern-Algorithmus angepasst werden, wenn festgestellt wird, dass der gemessene Druck nach Ablauf der vordefinierten Öffnungsdauer außerhalb einer Toleranz um einen erwarteten Druck liegt. Damit kann sichergestellt werden, dass eventuell Fehlkalibrierungen im Verfahren bzw. Veränderungen im Öffnungsverhalten des Rücklaufventils 9 ausgeglichen werden können. Das Rücklaufventil 9 kann beispielsweise ein Magnetventil mit Membran sein, in dem sich im Laufe der Zeit die Membran langsam abnutzen kann bzw. die Magnetkraft verändern kann (z.B. durch Restmagnetisierungen). Eine adaptive Anpassung der vordefinierten Verfahrensparameter ist daher wünschenswert.

Das Leitungssystem 7 kann Leitungen aus günstigerem Polyamid umfassen und benötigt nicht notwendigerweise besonders widerstandsfähige, elastische und druckresistente Leitungen (wie beispielsweise solche aus Ethylen-Propylen-Dien-Kautschuk). Mit dem erfindungsgemäßen Verfahren können langanhaltende Druckspitzen über dem Betriebsdruck vermieden werden, und damit die Anforderungen an das Leitungsmaterial gesenkt werden.

Das Abgassystem 1 umfasst außerdem einen Abgassensor 12, der die Zusammensetzung der Abgase abgasstromabwärts des SCR-Katalysators 4 misst und insbesondere die Menge an Stickoxiden bestimmt. Damit kann die Einspritzrate an Harnstofflösung dem Abgasausstoß angepasst werden, um diesen möglichst gering zu halten. Das Abgassystem 1 umfasst außerdem einen Temperatursensor 13, der die Temperatur der Abgase misst, was ebenfalls in die Bestimmung der notwendigen Einspritzrate an Harnstofflösung miteingehen kann. Der Temperatursensor 13 kann auch an einer anderen Stelle des Katalysatorsystems 2 angeordnet sein und ist hier nur beispielhaft abgasstromabwärts des SCR-Katalysators 4 angeordnet.

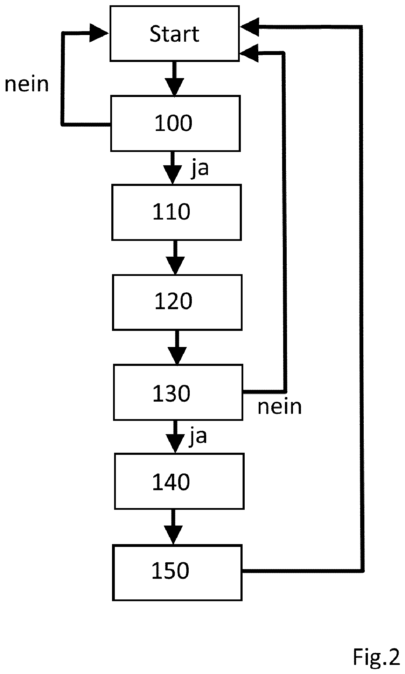

Figur 2 offenbart ein Flussdiagramm einer Ausführungsform des erfindungsgemäßen Verfahrens. Erfindungsgemäß wird zur Steuerung des zuvor beschriebenen Abgassystems 1 ein Verfahren zur Verfügung gestellt, umfassend die folgenden Schritte:
Nach dem Start, Feststellen in Schritt 100, ob während des Betriebs des Abgassystems 1 eine oder mehrere der folgenden Zustände vorliegen:
a) eine Einspritzrate pro Zeit von Harnstofflösung des Dosierventils 6 kleiner oder gleich einer vordefinierten Einspritzgrenze ist,
b) ein vom Drucksensor 10 im Leitungssystem 7 gemessener Druck eine vordefinierte erste obere Druckgrenze überschreitet.

Das Rücklaufventil 9 wird im Schritt 110 für eine erste vordefinierte Öffnungsdauer geöffnet, wenn die Zustände a) und b) vorliegen, sowie mindestens einer der Zustände bereits für mindestens eine vordefinierte Zeitspanne vorliegt. Andernfalls bleibt das Rücklaufventil 9 geschlossen und das Verfahren kehrt zum Start zurück. Man kann hier von einer druckbasierten Regelung sprechen.

Folgend dem Schritt 110 wird das Rücklaufventil 9 im Schritt 120 nach Ablauf der ersten vordefinierten Öffnungsdauer wieder geschlossen.

In Schritt 130 wird entschieden, ob das Rücklaufventil 9 in der laufenden Öffnungssequenz erneut geöffnet wird. Dies kann beispielsweise dadurch erfolgen, dass durch den Drucksensor 10 festgestellt wird ob der Druck innerhalb einer Mindestschließdauer (von z.B. 250ms) eine zweite obere Druckgrenze überschreitet (z.B. bei einer ersten obere Druckgrenze von 6 bar eine zweite obere Druckgrenze von 5,2 bar). Es können für eine Öffnungssequenz eine Reihe von absteigenden oberen Druckgrenzen vordefiniert sein, wodurch der Überdruck schrittweise und kontrolliert auf den Betriebsdruck zurückgeführt wird. Ein einzelner Öffnungsschritt macht es deutlich schwieriger, den Betriebsdruck möglichst genau zu erreichen.

Alternativ kann die Entscheidung, ob ein weiteres Mal das Rücklaufventil 9 geöffnet wird, dadurch getroffen werden, ob der Druck den Betriebsdruck unterschritten hat oder eine Toleranzgrenze oberhalb des Betriebsdrucks unterschritten wurde.

Die erste vordefinierte Öffnungsdauer, sowie eventuelle zweite, dritte, vierte etc. vordefinierte Öffnungsdauern können als Sequenz vordefiniert sein. Die Länge der Öffnungsdauern einer Öffnungssequenz kann absteigend sein, z.B. 10ms, 8ms, 6ms, 4ms.

Einzelne vordefinierte Öffnungsdauern oder ganze Sequenzen von Öffnungsdauern können bei der Entscheidung für ein erstes Öffnen des Rücklaufventils 9 abhängig vom Startdruck sein. Je nach Temperatur des Abgassystems kann der Druck im Leitungssystem 7 nach einer Verringerung der Einspritzrate unterschiedlich schnell ansteigen und damit ein unterschiedlich starkes Druckablassen erfordern. Beispielsweise kann bei einem höheren Überdruck zu Beginn der Sequenz nur die erste Öffnungsdauer länger sein oder es können alle Öffnungsdauern der Sequenz länger sein (und umgekehrt bei niedrigerem Überdruck oberhalb der oberen Druckgrenze). Tendenziell wird der Großteil des Überdrucks in der ersten Öffnungsdauer abgelassen, weshalb es ausreichen kann lediglich die erste Öffnungsdauer druckabhängig zu gestallten.

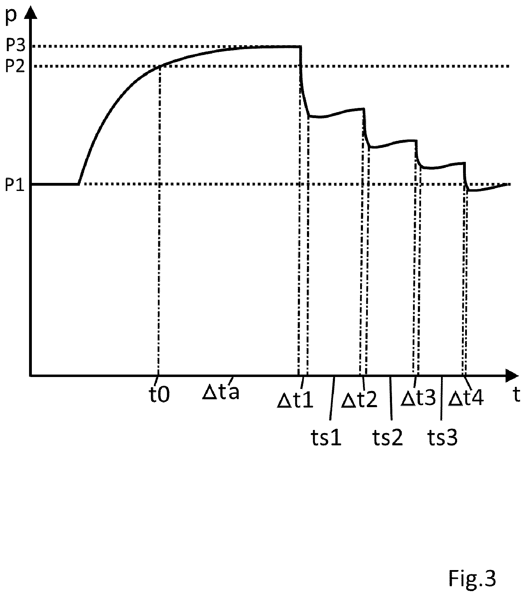

Folgend im Schritt 140 wird das Rücklaufventil 9 im Schritt 150 nach Ablauf der zweiten vordefinierten Öffnungsdauer wieder geschlossen. Der Übersichtlichkeit halber endet das Verfahren hier nach zwei möglichen Öffnungen des Rücklaufventils 9 und startet neu. Das Verfahren kann aber drei, vier, fünf oder mehr Öffnungen des Rücklaufventils 9 in einer Sequenz umfassen, wobei die tatsächlich durchgeführte Anzahl an Öffnungsvorgängen in einer Sequenz wie oben beschrieben abhängig vom nach jedem Öffnen in der Sequenz erreichten Druck sein kann. Figur 3 zeigt eine schematische Darstellung des Druckverlaufs im Leitungssystem 7 in einer Ausführungsform des erfindungsgemäßen Verfahrens. P1 bezeichnet hier den Betriebsdruck und P2 die erste obere Druckgrenze. Bei einem Wechsel von einer hohen Einspritzrate zu einer niedrigen Einspritzrate von Harnstofflösung kommt es wie eingangs beschrieben zu einem Druckanstieg der bereits unter Druck stehenden Harnstofflösung im Leitungssystem 7 durch externe Wärme aus dem Abgassystem 1 (insbesondere durch die heißen Abgase im Katalysatorsystem 2). Infolge steigt der Druck im Leitungssystem 7 an, bis er zum Zeitpunkt t0 die erste obere Druckgrenze P2 überschreitet. Wenn der Druck nun länger als die vordefinierte Zeitspanne Δta (z.B. im Bereich von 5-60 Sekunden, abhängig von der Ausführungsform der Abgassystems) oberhalb der ersten oberen Druckgrenze verbleibt, und gleichzeitig die Einspritzrate unter der Einspritzgrenze bleibt wird das Rücklaufventil 9 verfahrensgemäß mit Ablauf der Zeitspanne Δta für eine erste Öffnungsdauer Δt1 (z.B. 10ms) geöffnet. Mit Ablauf der ersten Öffnungsdauer Δt1 wird das Rücklaufventil 9 wieder geschlossen.

Der Druckabbau erfolgt hier sequenziell, wobei die Anzahl an Öffnungsvorgängen und die Öffnungsdauern in einer Sequenz vordefiniert sein können. Die Sequenz umfasst in diesem Ausführungsbeispiel vier Öffnungsvorgänge.

Das Rücklaufventil 9 bleibt zwischen je zwei Öffnungsvorgängen für eine erste, zweite und dritte Schließdauer ts1, ts2, ts3 (beispielsweise jeweils mindestens 250ms) geschlossen. Damit kann z.B. sichergestellt werden, dass eine exakte Druckmessung vorliegt, bevor entschieden wird, ob das Rücklaufventil erneut geöffnet wird. Gleichzeitig kann festgestellt werden, ob der Druck wieder ansteigt.

In einer Ausführungsform wird nach jedem Schließen des Rücklaufventils 9 festgestellt, ob eine vordefinierte untere Druckgrenze (z.B. P1 oder P1+ΔP, mit ΔP< 0,1bar) unterschritten wurde. Falls die untere Druckgrenze nicht unterschritten wurde erfolgt ein erneutes Öffnen des Rücklaufventils 9 für eine weitere vordefinierte Öffnungsdauer Δt2, Δt3, Δt4. Das Rücklaufventil 9 kann zum Beispiel erneut geöffnet werden, wenn der Druck noch oberhalb des Betriebsdrucks P1 liegt. Es ist auch möglich das jeweils erneute Öffnen des Rücklaufventils 9 an ein Überschreiten einer vordefinierten zweiten oberen Druckgrenze, dritten oberen Druckgrenze, vierten oberen Druckgrenze etc. jeweils nach dem vorherigen Schließen des Rücklaufventils 9 zu koppeln. Wird ein Überschreiten dieser weiteren oberen Druckgrenzen beispielsweise innerhalb der Schließdauer ts1, ts2, ts3 zwischen Öffnungsvorgängen festgestellt, so wird das Rücklaufventil erneut geöffnet, falls nicht, wird das Verfahren beendet und ein erneutes Öffnen des Ventils ist erst wieder beim erfindungsgemäßen kumulativen Vorliegen der Zustände a) + b) und dem dauerhaften Vorliegen mindestens eines der Zustände vorgesehen.

Es ist auch möglich, mindestens eine vordefinierte Öffnungsdauer Δt1, Δt2, Δt3, Δt4 anzupassen, wenn festgestellt wird, dass der gemessene Druck nach Ablauf der vordefinierten Öffnungsdauer Δt1, Δt2, Δt3, Δt4 außerhalb einer Toleranz um einen erwarteten Druck liegt. Damit kann sichergestellt werden, dass eventuell Fehlkalibrierungen im Verfahren bzw. Veränderungen im Öffnungsverhalten des Rücklaufventils 9 ausgeglichen werden können.

Die vordefinierten Öffnungsdauern Δt1, Δt2, Δt3, Δt4 können beispielsweise von einem Öffnungsstartdruck P3 im Leitungssystem bei Ablauf der Zeitspanne Δta abhängig sein. Die vordefinierten Öffnungsdauern Δt1, Δt2, Δt3, Δt4, etc. können in Form einer vom Öffnungsstartdruck P3 abhängigen Tabelle oder Funktion vorliegen und entsprechend bei Ablauf der Zeitspanne Δta ausgewählt werden.

Weitere obere Druckgrenzen sind hier der Übersichtlichkeit halber nicht eingezeichnet, sie können jedoch Teil des Verfahrens sein, um zu bestimmen ob weitere (zweite, dritte, vierte, etc.) Öffnungen des Rücklaufventils in der Sequenz des Verfahrens ausgeführt werden sollen oder nicht.

## Patentansprüche

1. Verfahren zur Steuerung eines Rücklaufventils (9) eines Abgassystems (1),
wobei das Abgassystem (1) umfasst:
- ein Katalysatorsystem (2),
- einen Harnstofflösungstank (5),
- zumindest ein Dosierventil (6), zum Einspritzen von Harnstofflösung in das Katalysatorsystem (2),
- ein Leitungssystem (7), das einen Fluss von Harnstofflösung aus dem Harnstofflösungstank (5) zum Dosierventil (6) und zurück ermöglicht,
- eine zwischen dem Harnstofflösungstank (5) und dem Dosierventil (6) im Leitungssystem (7) angeordnete Pumpe (8),
- eine zwischen dem Dosierventil (6) und dem Harnstofflösungstank (5) im Leitungssystem (7) angeordnetes Rücklaufventil (9), und
- einen Drucksensor (10), der eingerichtet ist, den Druck im Leitungssystem (7) zu messen,
wobei das Verfahren die folgenden Schritte umfasst:
- Feststellen, ob während des Betriebs des Abgassystems (1) eine oder mehrere der folgenden Zustände vorliegen:
a) eine Einspritzrate pro Zeit von Harnstofflösung des Dosierventils (6) kleiner oder gleich einer vordefinierten Einspritzgrenze ist,
b) ein vom Drucksensor (10) im Leitungssystem (7) gemessener Druck eine vordefinierte erste obere Druckgrenze (P2) überschreitet,
- Öffnen des Rücklaufventils (9) für eine erste vordefinierte Öffnungsdauer (Δt1), wenn die Zustände a) und b) vorliegen, sowie mindestens einer der Zustände bereits für mindestens eine vordefinierte Zeitspanne (Δta) vorliegt,
- Schließen des Rücklaufventils (9) nach Ablauf der ersten vordefinierten Öffnungsdauer (Δt1), **dadurch gekennzeichnet, dass**
das Rücklaufventil (9) nach dem Schließen in einer Sequenz mindestens ein zweites Mal für eine zweite vordefinierte Öffnungsdauer (Δt2) geöffnet und dann wieder geschlossen wird.

2. Verfahren nach Anspruch 1, wobei das Rücklaufventil (9) zwischen je zwei Öffnungsvorgängen für eine Schließdauer (ts1, ts2, ts3) von mindestens 250ms geschlossen bleibt.

3. Verfahren nach einem der vorstehenden Ansprüche, wobei nach einem Schließen des Rücklaufventils (9) festgestellt wird, ob eine vordefinierte untere Druckgrenze unterschritten wurde, und
falls die untere Druckgrenze nicht unterschritten wurde, wird das Rücklaufventil (9) erneut für eine weitere vordefinierte Öffnungsdauer (Δt2, Δt3, Δt4) geöffnet.

4. Verfahren nach einem der vorstehenden Ansprüche, wobei mindestens eine vordefinierte Öffnungsdauer (Δt1, Δt2, Δt3, Δt4) angepasst wird, wenn festgestellt wird, dass der gemessene Druck nach Ablauf der vordefinierten Öffnungsdauer (Δt1, Δt2, Δt3, Δt4) außerhalb einer Toleranz um einen erwarteten Druck liegt.

5. Verfahren nach einem der vorstehenden Ansprüche, wobei die Zeitspanne (Δta) mehr als 5 Sekunden beträgt, vorzugsweise zwischen 5 und 60 Sekunden beträgt.

6. Verfahren nach einem der vorstehenden Ansprüche, wobei die erste obere Druckgrenze (P2) 120% eines Betriebsdrucks (P1) zum Einspritzen der Harnstofflösung beträgt und / oder wobei die erste obere Druckgrenze (P2) 1 bar über dem Betriebsdruck (P1) liegt.

7. Abgassystem umfassend:
- ein Katalysatorsystem (2),
- einen Harnstofflösungstank (5),
- zumindest ein Dosierventil (6), zum Einspritzen von Harnstofflösung in das Katalysatorsystem (2),
- ein Leitungssystem (7), das einen Fluss von Harnstofflösung aus dem Harnstofflösungstank (5) zum Dosierventil (6) und zurück ermöglicht,
- eine zwischen dem Harnstofflösungstank (5) und dem Dosierventil (6) im Leitungssystem (7) angeordnete Pumpe (8),
- ein zwischen dem Dosierventil (6) und dem Harnstofflösungstank (5) im Leitungssystem (7) angeordnetes Rücklaufventil (9), und
- einen Drucksensor (10), der eingerichtet ist, den Druck im Leitungssystem (7) zu messen,
- eine Steuereinheit (11), die mit dem Dosierventil (6), der Pumpe (8), dem Rücklaufventil (9) und dem Drucksensor (10) kommunizierend verbunden ist, **dadurch gekennzeichnet, dass** die Steuereinheit (11) dazu eingerichtet ist, ein Verfahren nach einem der vorstehenden Ansprüche auszuführen.

8. Abgassystem nach Anspruch 7, **dadurch gekennzeichnet, dass** das Leitungssystem (7) Leitungen aus Polyamid umfasst.

## Claims

1. Method for controlling a return valve (9) of an exhaust system (1), wherein the exhaust system (1) comprises:
- a catalytic-converter system (2),
- a urea-solution tank (5),
- at least one dosing valve (6) for injecting urea solution into the catalytic-converter system (2),
- a line system (7) which enables urea solution to flow from the urea-solution tank (5) to the dosing valve (6) and back,
- a pump (8) arranged in the line system (7) between the urea-solution tank (5) and the dosing valve (6),
- a return valve (9) arranged in the line system (7) between the dosing valve (6) and the urea-solution tank (5), and
- a pressure sensor (10) which is configured to measure the pressure in the line system (7), wherein the method comprises the following steps:
- determining whether one or more of the following states are present during the operation of the exhaust system (1):
a) an injection rate per unit of time of urea solution of the dosing valve (6) is less than or equal to a predefined injection limit,
b) a pressure measured by the pressure sensor (10) in the line system (7) exceeds a predefined first upper pressure limit (P2),
- opening the return valve (9) for a first predefined opening duration (Δt1) if states a) and b) are present and at least one of the states has already been present for at least a predefined period of time (Δta),
- closing the return valve (9) after the first predefined opening duration (Δt1) has elapsed, **characterized in that**
the return valve (9) is, after being closed, in a sequence, opened at least a second time for a second predefined opening duration (Δt2) and then closed again.

2. Method according to Claim 1, wherein, between every two opening processes, the return valve (9) remains closed for a closing duration (ts1, ts2, ts3) of at least 250 ms.

3. Method according to either of the preceding claims, wherein, after a closure of the return valve (9), it is determined whether a predefined lower pressure limit has been fallen below, and,
if the lower pressure limit has not been fallen below, the return valve (9) is reopened for a further predefined opening duration (Δt2, Δt3, Δt4).

4. Method according to one of the preceding claims, wherein at least one predefined opening duration (Δt1, Δt2, Δt3, Δt4) is adapted if it is determined that, after the predefined opening duration (Δt1, Δt2, Δt3, Δt4) has elapsed, the measured pressure lies outside a tolerance around an expected pressure.

5. Method according to one of the preceding claims, wherein the period of time (Δta) is more than 5 seconds, preferably between 5 and 60 seconds.

6. Method according to one of the preceding claims, wherein the first upper pressure limit (P2) is 120% of an operating pressure (P1) for injection of the urea solution, and/or wherein the first upper pressure limit (P2) is 1 bar above the operating pressure (P1).

7. Exhaust system comprising:
- a catalytic-converter system (2),
- a urea-solution tank (5),
- at least one dosing valve (6) for injecting urea solution into the catalytic-converter system (2),
- a line system (7) which enables urea solution to flow from the urea-solution tank (5) to the dosing valve (6) and back,
- a pump (8) arranged in the line system (7) between the urea-solution tank (5) and the dosing valve (6),
- a return valve (9) arranged in the line system (7) between the dosing valve (6) and the urea-solution tank (5), and
- a pressure sensor (10) which is configured to measure the pressure in the line system (7),
- a control unit (11) which is connected in a communicating manner to the dosing valve (6), the pump (8), the return valve (9) and the pressure sensor (10),
**characterized in that** the control unit (11) is configured to carry out a method according to one of the preceding claims.

8. Exhaust system according to Claim 7, **characterized in that** the line system (7) comprises lines composed of polyamide.

## Revendications

1. Procédé de commande d'une soupape anti-retour (9) d'un système d'échappement (1),
le système d'échappement (1) comprenant :
- un système de catalyseur (2),
- un réservoir de solution d'urée (5),
- au moins une soupape de dosage (6), servant à l'injection de solution d'urée dans le système de catalyseur (2),
- un système de conduites (7) qui permet un flux de solution d'urée à partir du réservoir de solution d'urée (5) jusqu'à la soupape de dosage (6) et inversement,
- une pompe (8) disposée entre le réservoir de solution d'urée (5) et la soupape de dosage (6) dans le système de conduites (7),
- une soupape anti-retour (9) disposée entre la soupape de dosage (6) et le réservoir de solution d'urée (5) dans le système de conduites (7), et
- un capteur de pression (10) qui est conçu pour mesurer la pression dans le système de conduites (7),
le procédé comprenant les étapes suivantes :
- détermination de la présence ou non d'un ou plusieurs des états suivants pendant le fonctionnement du système d'échappement (1) :
a) un taux d'injection par unité de temps de solution d'urée par la soupape de dosage (6) est inférieur ou égal à une limite d'injection prédéfinie,
b) une pression mesurée par le capteur de pression (10) dans le système de conduites (7) dépasse une première limite de pression supérieure (P2) prédéfinie,
- ouverture de la soupape anti-retour (9) pendant une première durée d'ouverture (Δt1) prédéfinie, si les états a) et b) sont présents, et au moins l'un des états est présent déjà pour au moins un laps de temps (Δta) prédéfini,
- fermeture de la soupape anti-retour (9) une fois la première durée d'ouverture (Δt1) prédéfinie écoulée, **caractérisé en ce que**
la soupape anti-retour (9) est, après la fermeture, ouverte dans une séquence au moins une deuxième fois pendant une deuxième durée d'ouverture (Δt2) prédéfinie puis est à nouveau fermée.

2. Procédé selon la revendication 1, dans lequel la soupape anti-retour (9) demeure fermée pendant une durée de fermeture (ts1, ts2, ts3) d'au moins 250 ms entre deux opérations d'ouverture respectives.

3. Procédé selon l'une des revendications précédentes, dans lequel, après une fermeture de la soupape anti-retour (9), on détermine si l'on est passé ou non en dessous d'une limite de pression inférieure prédéfinie, et
dans le cas où l'on n'est pas passé en dessous de la limite de pression inférieure, la soupape anti-retour (9) est ouverte à nouveau pendant une autre durée d'ouverture (Δt2, Δt3, Δt4) prédéfinie.

4. Procédé selon l'une des revendications précédentes, dans lequel au moins une durée d'ouverture (Δt1, Δt2, Δt3, Δt4) prédéfinie est adaptée s'il a été déterminé que la pression mesurée se situe en dehors d'une tolérance autour d'une pression attendue une fois la durée d'ouverture (Δt1, Δt2, Δt3, Δt4) prédéfinie écoulée.

5. Procédé selon l'une des revendications précédentes, dans lequel le laps de temps (Δta) vaut plus de 5 secondes, de préférence vaut entre 5 et 60 secondes.

6. Procédé selon l'une des revendications précédentes, dans lequel la première limite de pression supérieure (P2) vaut 120% d'une pression de fonctionnement (P1) pour l'injection de la solution d'urée et/ou dans lequel la première limite de pression supérieure (P2) se situe à 1 bar au-dessus de la pression de fonctionnement (P1).

7. Système d'échappement comprenant :
- un système de catalyseur (2),
- un réservoir de solution d'urée (5),
- au moins une soupape de dosage (6), servant à l'injection de solution d'urée dans le système de catalyseur (2),
- un système de conduites (7) qui permet un flux de solution d'urée à partir du réservoir de solution d'urée (5) jusqu'à la soupape de dosage (6) et inversement,
- une pompe (8) disposée entre le réservoir de solution d'urée (5) et la soupape de dosage (6) dans le système de conduites (7),
- une soupape anti-retour (9) disposée entre la soupape de dosage (6) et le réservoir de solution d'urée (5) dans le système de conduites (7), et
- un capteur de pression (10) qui est conçu pour mesurer la pression dans le système de conduites (7),
- une unité de commande (11) qui est reliée de manière communicante à la soupape de dosage (6), la pompe (8), la soupape anti-retour (9) et le capteur de pression (10),
**caractérisé en ce que** l'unité de commande (11) est conçue pour mettre en oeuvre un procédé selon l'une des revendications précédentes.

8. Système d'échappement selon la revendication 7, **caractérisé en ce que** le système de conduites (7) comprend des conduites en polyamide.
